(19) Europäisches Patentamt
European Patent Office
Office européen des brevets

(11) **EP 3 776 605 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **19718622.4**

(22) Anmeldetag: **10.04.2019**

(51) Internationale Patentklassifikation (IPC):
*H01F 5/00* (2006.01)   *H01F 41/04* (2006.01)
*G01L 3/10* (2006.01)

(52) Gemeinsame Patentklassifikation (CPC):
**H01F 5/003; G01L 3/10; H01F 41/041**

(86) Internationale Anmeldenummer:
**PCT/EP2019/059162**

(87) Internationale Veröffentlichungsnummer:
**WO 2019/197500 (17.10.2019 Gazette 2019/42)**

(54) **VERFAHREN ZUM HERSTELLEN EINES MIT EINER PLANARSPULENANORDNUNG VERSEHENEN SENSORKOPFES**

METHOD FOR PRODUCING A SENSOR HEAD PROVIDED WITH A PLANAR COIL ASSEMBLY

PROCÉDÉ DE PRODUCTION D'UNE TÊTE DE CAPTEUR ÉQUIPÉE D'UN ENSEMBLE DE BOBINE PLANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2018 DE 102018108869**
**20.06.2018 DE 102018114785**

(43) Veröffentlichungstag der Anmeldung:
**17.02.2021 Patentblatt 2021/07**

(73) Patentinhaber: **Trafag AG**
**8608 Bubikon (CH)**

(72) Erfinder:
• **SCHWERSENZ, Anatol**
**74172 Neckarsulm (DE)**
• **RIESLING, Viktoria**
**74676 Niedernhall (DE)**
• **SCHWIERTZ, Sebastian**
**74523 Schwäbisch Hall (DE)**

(74) Vertreter: **KASTEL Patentanwälte PartG mbB**
**St.-Cajetan-Straße 41**
**81669 München (DE)**

(56) Entgegenhaltungen:
**DE-A1- 4 105 999       DE-A1-102016 122 172**
**US-A1- 2010 194 513    US-A1- 2015 302 967**
**US-A1- 2017 365 386**

## Beschreibung

Die Erfindung betrifft ein Verfahren zum Herstellen eines Sensorkopfes für einen Drehmomentsensor oder Kraftsensor, bei dem eine Planarspulenanordnung mit mehreren übereinander angeordneten Planarspuleneinheiten hergestellt wird. Außerdem betrifft die Erfindung einen durch ein solches Verfahren erhältlichen Sensorkopf.

Insbesondere befasst sich die Erfindung mit einer besonders vorteilhaften Herstellung eines Sensorkopfes für einen Drehmomentmessgeber und einen Drehmomentsensor, mit dem Drehmoment an einer Welle unter Erfassung von Magnetfeldänderungen gemessen werden können. Derartige Drehmomentsensoren, die Drehmomente in Wellen aufgrund von Magnetfeldänderungen erfassen, sowie die wissenschaftlichen Grundlagen hierfür sind in folgenden Literaturstellen beschrieben:

D1 HINZ, Gerhard; VOIGT, Heinz; BOLL, R.; OBERSHOTT, K. J. (Hrsg.): Chapter 4 - Magnetoelastic sensors. In: Sensors: Magnetic sensors. Weinheim [u. a.]: VCH-Verl.-Ges., 1989 (Sensors: A comprehensive survey; 5). S. 97-152. - ISBN 3-527-26771-9
D2 US 3 311 818 A
D3 EP 0 384 042 A2
D4 DE 30 31 997 A1
D5 US 3 011 340 A
D6 US 4 135 391 A
D7 DE 10 2009 008 074 A1
D8 WO 2012/152515 A1
D9 DE 85 11 143 U1

Insbesondere eine Bauart von Drehmomentmessgebern, wie sie in der D4 (DE 30 31 997 A1) beschrieben ist, hat sich als besonders wirkungsvoll für die Messung von Drehmomenten in Wellen und anderen Messstellen herausgestellt.

Eine besonders vorteilhafte Herstellweise zum Herstellen eines Sensorkopfes für einen derartigen Kraftsensor oder Drehmomentsensor ist in der folgenden Literaturstelle beschrieben und dargestellt:
D10 WO 2018/019859.

Demnach werden eine Generatorspule zum Erzeugen eines Magnetfeldes sowie Messspulen zum Messen von Magnetfeldänderungen durch übereinander liegende und miteinander über Vias oder Durchkontaktierungen verbundene Planarspulen gebildet. Demnach ist in dem Dokument D10 ein Verfahren zum Herstellen einer Planarspulenanordnung, die n übereinander angeordneten Planarspuleneinheiten aufweist, beschrieben, wobei n eine natürliche Zahl größer 1 ist, wobei das Verfahren die Schritte umfasst:

a) Herstellen einer i-ten Planarspuleneinheit wenigstens einer aus einem elektrischen Leiter gebildeten Planarspule mit einer Planarspulendicke $d_{i,PS}$ auf einer Isoliermaterialschicht aus elektrischen Isolationsmaterial mit einer Schichtdicke $d_{i,IM}$, für i gleich 1 bis n und
b) schichtweises Anordnen der Planarspuleneinheiten unter Zwischenlage der Isoliermaterialschicht zwischen den Planarspulen.

Auch aus den folgenden Literaturstellen sind Verfahren zum Herstellen von Planarspulenanordnungen für andere Einsatzzwecke bekannt:

D11 EP 2 107 577 A1
D12 WO 2010/065113 A1
D13 WO 2011/138232 A1
D14 US 2015/0302967 A1
D15 US 2017/0365386 A1
D16 DE 41 05 999 A1
D17 US 2010/0194513 A2

Eine besonders bevorzugte Ausgestaltung der Erfindung sieht die Nutzung von flexiblen Leiterplatten (Englisch: flexible printed circuits) und deren Anwendung vor. Als Literaturstelle hierzu wird insbesondere auf die D18 WO 2011/152994A1 verwiesen.

Die Erfindung hat sich zur Aufgabe gestellt, ein Verfahren zum Herstellen einer Planarspulenanordnung zur Verwendung in derartigen Sensorköpfen von Drehmomentsensoren oder Kraftsensoren derart zu verbessern, dass unter kostengünstiger Fertigung genauere Messungen ermöglicht sind.

Zum Lösen dieser Aufgabe schafft die Erfindung ein Verfahren zur Herstellung eines Sensorkopfes mit den Schritten des Anspruches 1. Weiter schafft die Erfindung ein mit einem derartigen Sensorkopfherstellverfahren erhältlichen Sensorkopf.

Vorteilhafte Ausgestaltungen sind Gegenstand der Unteransprüche.

Die Erfindung schafft gemäß einem Aspekt davon ein Verfahren zum Herstellen eines Sensorkopfes für einen Drehmoment- oder Kraftsensor, der eine Generatorspule zum Erzeugen eines Magnetfeldes und wenigstens eine erste und eine zweite Messspule zum Messen einer Änderung eines in einen Messkörper induzierten Magnetfeldes aufweist, umfassend:
Herstellen der Generatorspule und der Messspulen in Form einer Planarspulenanordnung, die n übereinander angeordnete Planarspuleneinheiten aufweist, wobei n eine natürliche Zahl größer 1 ist, mit den Schritten:

a) Herstellen einer i-ten Planarspuleneinheit durch computergestützte Fertigung wenigstens einer aus einem elektrischen Leiter gebildeten Planarspule mit einer Planarspulendicke $d_{i,PS}$ auf einer Isoliermaterialschicht aus elektrischen Isolationsmaterial mit einer Schichtdicke $d_{i,IM}$, für i gleich 1 bis n und
b) schichtweises Anordnen der Planarspuleneinheiten unter Zwischenlage der Isoliermaterialschicht zwischen den Planarspulen,

wobei die Dicken $d_{i,PS}$ und $d_{i,IM}$ derart gewählt werden, dass gilt:

$$0{,}6 \leq \frac{D_{PS}}{D_{IM}+D_{PS}} \leq 0{,}9,$$

wobei $D_{PS}=\sum_{i=1}^{n} d_{i,PS}$ die Summe der Dicken $d_{i,PS}$ der Planarspulen und $D_{IM}=\sum_{i=1}^{n} d_{i,IM}$ die Summe der Dicken der Isoliermaterialschichten ist.

Mit anderen Worten werden 60 bis 90% der Gesamtdicke der wenigstens einen durch die einzelnen Planarspulen gebildeten Spule durch das elektrische Leitermaterial und entsprechend nur 40 bis 10% der Gesamtdicke durch das Isoliermaterial gebildet.

Erfindungsgemäß umfasst das Verfahren elektrisches Verbinden übereinander angeordneter Planarspulen der Planarspuleneinheiten, um wenigstens eine Magnetspule zu bilden.

Es ist bevorzugt, dass in Schritt b) zwischen jeder Planarspule nur eine einzelne Isoliermaterialschicht mit ihrer Dicke $d_{i,IM}$ angeordnet wird.

Erfindungsgemäß umfasst Schritt a) den Schritt:
computergestütztes Herstellen mehrerer in einer Ebene liegenden Planarspulen pro Planarspuleneinheit.

Es ist bevorzugt, dass Schritt a) den Schritt umfasst:
symmetrisches computergestütztes Herstellen der mehreren in einer Ebene liegenden Planarspulen pro Planarspuleneinheit.

Es ist bevorzugt, dass Schritt a) den Schritt umfasst:
computergestütztes Herstellen von Planarspulen unterschiedlicher Planarspuleneinheiten symmetrisch zueinander.

Es ist bevorzugt, dass Schritt a) den Schritt umfasst:
symmetrisches Aufbauen von Planarspulen einer Planarspuleneinheit und der Planarspulen mehrerer der Planarspuleneinheiten durch das computergestützte Herstellen;

Es ist bevorzugt, dass Schritt a) den Schritt umfasst:
Durchführen des computergestützten Herstellens durch lithografisches Herstellen der wenigstens einen Planarspule,

Es ist bevorzugt, dass Schritt a) den Schritt umfasst:
computergestütztes Herstellen der mehreren Planarspulen pro Planarspuleneinheit auf einer Isoliermaterialschicht, die ausgewählt ist aus der Gruppe von Isoliermaterialien, die ein Leiterplattenbasismaterial, eine Prepregschicht und ein Kunststoffmaterial umfasst.

Es ist bevorzugt, dass Schritt a) den Schritt umfasst:
Herstellen wenigstens einer der Planarspulen mit mehreren voneinander getrennten Spulenbahnen.

Es ist bevorzugt, dass Schritt a) den Schritt umfasst:
Herstellen der zentralen Generatorplanarspule und der ersten, der zweiten und einer dritten Messplanarspule pro Planarspuleneinheit in punktsymmetrischer Anordnung zueinander.

Es ist bevorzugt, dass Schritt a) den Schritt umfasst:
Herstellen der zentralen Generatorplanarspule und der ersten, der zweiten, einer dritten und einer vierten Messplanarspule pro Planarspuleneinheit in achsensymmetrischer oder punktsymmetrischer Anordnung zueinander.

Eine besonders bevorzugte Ausgestaltung des Verfahrens ist gekennzeichnet durch
d) Schaffen wenigstens einer Durchgangsöffnung durch ein Zentrum übereinanderliegender Planarspulen der Planarspuleneinheiten.

Vorzugsweise umfasst das Verfahren den Schritt:
elektrisches Verbinden übereinanderliegender Planarspulen mittels wenigstens einer Durchkontaktierung an der wenigstens eine Durchgangsöffnung.

Vorzugsweise umfasst das Verfahren den Schritt:
Einfügen eines Flusskonzentrators in die wenigstens eine Durchgangsöffnung.

Vorzugsweise umfasst das Verfahren den Schritt:
Durchführen von Schritt d) derart, dass die Isoliermaterialschichten vor Schritt a) und/oder vor Schritt b) oder nach Schritt b) mit dem jeweiligen Bereich der Durchgangsöffnung versehen werden.

Weiter schafft die Erfindung einen Sensorkopf, der mit einem solchen Sensorkopfherstellverfahren erhältlich ist.

Bevorzugte Ausgestaltungen der Erfindung schaffen verbesserte Verfahren zur Herstellung von Planarspulenanordnungen. Besonders bevorzugt wird dabei eine neue PCB-Spulentechnologie eingesetzt. "PCB" ist die Abkürzung für den englischen Begriff "printed circuit board". Demnach ist insbesondere eine Herstellweise der Spulen in Leiterplattentechnologie vorgesehen.

Vorzugsweise werden die Planarspulen auf einer flexiblen Leiterplatte hergestellt.

Vorzugsweise werden mehrere Planarspulen gemeinsam auf einer Ebene einer flexiblen Leiterplatte hergestellt.

Allgemein ist eine Idee, die Spulen mittels computergestützter Fertigung herzustellen. Unter computergestützter Herstellung werden Herstellverfahren verstanden, aus denen unmittelbar unter Verwendung von CAD-Daten die Herstellung durchgeführt wird. Besonders bevorzugt werden hierzu Lithographieverfahren verwendet, bei denen aus CAD-Daten erhältliche Muster auf ein Substrat, wie insbesondere ein Leiterplattensubstrat belichtet werden und so Schichten selektiv aufgetragen oder abgetragen werden.

Durch die computergestützte Herstellung lassen sich die Planarspulen auch in Großserie stets in gleicher Qualität und exakt baugleich zueinander herstellen. Dies hat insbesondere die im Folgenden noch näher erläuterten Vorteile bei der gleichzeitigen Verwendung mehrerer solcher Spulen, wie sie insbesondere in den Sensorköpfen gemäß den oben bezeichneten Literaturstellen D1-D10 einzusetzen sind.

Eine Verfahrensweise zum Herstellen von Planarspulenanordnungen in Leiterplattentechnik wie sie zum Beispiel aus D10 oder D11 bekannt sind, sieht die Übereinanderanordnung der einzelnen Planarspulen in Form von Faltspulen vor. Hierzu werden die Spulen auf einer flexiblen Leiterplatte erzeugt, die daraufhin gefaltet wird, um die Planarspulen aufeinander anzuordnen. Dadurch befinden sich zwischen jeder der Planarspulen wenigstens zwei Lagen Isoliermaterial aus Leiterplattenbasismaterial.

Bei der Erfindung ist dagegen vorgesehen, dass das Verhältnis der Dicken des Planarspulen bildenden elektrisch leitfähigen Materials und der Dicken des dazwischen eingefügten Isoliermaterials wie in Anspruch 1 definiert vorgegeben ist. Somit wird im Bereich der übereinander liegenden Planarspulen deutlich mehr elektrisch leitfähiges Material als Isoliermaterial vorgesehen. Somit kann eine besonders hohe magnetische Leistung auf besonders kleinem Raum erzeugt werden. Dies ist insbesondere durch die computergestützte Herstellung möglich, wodurch die Anordnung des leitfähigen Materials und des Isoliermaterials höchst genau reproduzierbar vorgegeben werden kann.

Bei einer besonders bevorzugten Ausgestaltung wird dabei derart vorgegangen, dass sich zwischen jeder der Planarspulen nur eine Lage Isoliermaterial befindet. Als Isoliermaterial wird beispielsweise eine auf einem Prepreg basierendes elektrisches Isoliermaterial eingefügt.

Erfindungsgemäß werden mehrere Planarspulen pro Schicht in einer Ebene gleichzeitig hergestellt und dann die Schichten übereinandergelegt, um so die Planarspulenanordnung zu bilden. Insbesondere werden so eine erste Planarspule zum Bilden einer Lage einer Generatorspule sowie eine zweite Planarspule zum Bilden einer Lage einer ersten Messspule sowie eine dritte Planarspule zum Bilden einer Lage einer zweiten Messspule gleichzeitig erzeugt. Vorzugsweise werden drei, vier oder fünf Planarspulen pro Ebene erzeugt, um die in den Literaturstellen D1-D10 näher erläuterten unterschiedlichen Konzepte von Sensorköpfen mittels der PCB-Spulentechnologie aufzubauen. Die Planarspuleneinheiten der verschiedenen Spulen werden somit in einem Prozess zusammen strukturiert und positioniert. Der Fertigungsprozess bringt es mit sich, dass ein Spulenträger und ein mechanischer, hochpräziser Halter in einem Stück ausgebildet werden.

Vorzugsweise umfasst das Verfahren den Schritt:
Symmetrischer Aufbau durch Verwendung von Planarspulen durch Lithographie.

Durch die computergestützte Fertigung, insbesondere Lithographie, existieren per Design kaum Symmetriebrüche. So kann man zum Beispiel symmetrisch aufgebaute Planarspulen oder Planarspulenpakete zu einer perfekt abgeglichenen Brückenschaltung zusammenschalten. Insbesondere werden symmetrisch aufgebaute übereinandergelegte Planarspuleneinheiten zu einer H-Brückenschaltung verschaltet. So lässt sich eine sehr gut ausgeglichene Brückenschaltung bauen, mit denen sehr genaue Messungen auch kleinerer Signale durchführbar sind. Von Hand gewickelte Spulen oder Spulen, die einzeln platziert werden, können durch Herstellungstoleranz Symmetrieunterschiede aufweisen, die zu einer nicht ausgeglichenen Brücke führen.

Vorzugsweise werden Durchkontaktierungen innerhalb der Spulen (insbesondere innerhalb von spiralförmig angeordneten Leiterbahnen von Planarspulen) vorgesehen, um die einzelnen Planarspulen jeweils übereinander angeordnet zu je einer Gesamtspule zu verbinden. Durch die Verwendung von Durchkontaktierungen auch innerhalb der Spule können so genannte Buried Vias vermieden werden. Hierdurch können hohe Produktionskosten bei den Planarspulen vermieden werden.

Vorzugsweise wird eine Anordnung vorgesehen, wie sie als bevorzugte Ausgestaltung in dem Dokument D10 erläutert ist. Demnach ist wenigstens eine Generatorspule zentral vorgesehen, um die herum sternförmig mehrere Messspulen angeordnet sind. Vorzugsweise wird hierbei ein punktsymmetrischer Aufbau der Spule oder der Spulen um den Generator herum vorgesehen. Bei einer Ausgestaltung ist der Sensorkopf hinsichtlich der Spulenanordnung punktsymmetrisch ausgebildet.

Besonders bevorzugt ist die Verwendung von nur einer Zwischenlage (z.B. Prepreg) zwischen dem Innenlagenkernen, um eine möglichst dünne und kompakte Planarspule zu erzeugen.

Vorzugsweise besitzt der Innenlagenkern eine Schicht Isoliermaterial mit einer Dicke in der Größenordnung von etwa 40 µm und auf dessen Ober- und Unterseite Schichten aus leitfähigen Material, wie insbesondere Kupfer, welche lithografisch belichtet und strukturiert werden.

Vorzugsweise werden die Innenlagenkerne im Anschluss an die lithografische Behandlung zueinander registriert gestapelt, wobei eine Prepreg-Zwischenlage als Isolator dazwischen geschichtet wird.

Dadurch entstehen Lagen von übereinander angeordneten Planarspuleneinheiten, welche zusammen in einer Vakuumpresse laminiert werden.

Vorzugsweise weisen die Zwischenlagen nach dem Laminieren in der Vakuumpresse jeweils eine Dicke von 30 µm und 70 µm und vorzugsweise in der Größenordnung um 50 µm auf.

Bei einer besonders bevorzugten Ausgestaltung werden Kontaktpads und Kontakte mit nicht-ferromagnetischen Materialien aufgebaut. Insbesondere sind die Kontakte, Kontaktpads und Verbindungen, wie insbesondere Lötverbindungen oder dergleichen, nickelfrei ausgeführt. Bevorzugt wird somit kein Nickel im Aufbau verwendet, da Nickel magnetisch ist und entsprechend die Felder unsymmetrisch lenken kann. Bei der üblichen elektrischen Kontaktierung von Sensoren wird im Normalfall Nickel auf die Pads aufgebracht (etwa in der Anordnung Cu-Ni-Au), um die Anschlüsse langzeitstabil gegen Korrosion zu gestalten. Dies wird bei der bevorzugten Ausgestaltung der Erfindung nicht durchgeführt; vielmehr erfolgt die Kontaktierung der Spulen mit nichtmagnetischen Materialien.

Vorzugsweise weist der Sensorkopf um die Spulenwindungen herum lediglich unterbrochene Leitungsbahnen oder Leitungsbereiche auf. Beispielsweise sind Kupferbereiche um die Spulen herum unterbrochen ausgeführt. Unterbrochene Kupferleitungen um die Spulenwindungen haben den Vorteil, dass Wirbelströme um die Spulen herum vermieden werden. Vorzugsweise befinden sich somit um die Spulen herum keine geschlossenen Leiterbahnen, um Wirbelstromverluste zu minimieren.

Im Folgenden werden bevorzugte Ausgestaltungen der Erfindung und deren Vorteile näher erläutert.

Die Erfindung betrifft insbesondere die Herstellung induktiver Bauelemente. Induktive Bauelemente zeichnen sich durch das Ausprägen eines Magnetfelds aus. Diese Induktivitäten werden erfindungsgemäß gezielt als Sensoren eingesetzt.

Vorzugsweise wird bei den Sensoren die Veränderung im magnetischen Umfeld registriert.

Bei einer Ausgestaltung einer möglichen Verwendung der Erfindung können auch Sensoren zusammen mit induktiven Bauelementen zum Bilden von Aktuatoren in einem System zum Tragen kommen. Vorzugsweise wird dann die Veränderung im magnetischen Transferweg bewertet.

Das Magnetfeld wird durch den in Leiterschleifen eingeprägten Strom ausgebildet. Bei bisherigen Sensorköpfen werden die Leiterschleifen zum Beispiel durch gewickelten Draht gebildet. Bei der Erfindung werden die Leiterschleifen planar, vorzugsweise in Leiterplatten, auf mehreren Lagen ausgebildet, um die geeignete Windungszahl für ein erwünschtes auszuprägendes Magnetfeld zu erreichen.

Der Vorteil einer computergestützten Fertigung liegt in der durch Daten vorgegebenen Definition der Spulen und der damit verbundenen Wiederholbarkeit in der Gesamtperformance. Zum Beispiel werden die Planarspulen im Leiterplattentechnik aufgebaut. Vorteilhaft ergibt die lithographische Definition der Spulen die Wiederholbarkeit in der Gesamtperformance. Zudem sind in Leiterplattentechnik hergestellte Produkte im Volumen sehr gut skalierbar herzustellen.

Vorzugsweise werden beim Aufbau der Spulen in Leiterplattentechnik unterschiedliche besondere Merkmale vorgesehen, welche die Gesamtperformance in Bezug auf die Anwendung und Herstellbarkeit verbessern.

Bei einer bevorzugten Ausgestaltung der durch übereinandergelegten Planarspulen ausgebildeten Spulen werden zur Verstärkung der Magnetfelder magnetische leitende Materialien eingesetzt. Zum Beispiel werden in die Spulen Ferrite eingesetzt. Diese werden typischerweise durch die Spulen hindurchgeführt.

Hierzu werden vorzugsweise Durchgangsöffnungen in den Spulen vorgesehen.

Andererseits werden bei Ausführungen der Spulen in Leiterplattentechnik bisher größere Flächen für die Durchkontaktierungen benötigt. Hierdurch ist der für die Wicklungen zur Verfügung stehende Platz gering; mit anderen Worten führen die Durchkontaktierungen und eventuell die hindurch zu führenden magnetisch leitenden Materialien zur Verstärkung der Magnetfelder zu einer deutlichen Einschränkung in dem in Draufsicht für den Platz der Wicklungen vorgesehenen Wicklungsfenster.

Bei einer Ausgestaltung werden die Durchkontaktierungen an dem Durchbruch für die einzusetzenden magnetisch leitenden Materialien zur Verstärkung der Magnetfelder versetzt. Die Durchkontaktierungen laufen vorzugsweise entlang der Wandung von Durchgangsöffnungen für die magnetisch leitenden Materialien entlang. Hierdurch kann der Flächenbedarf deutlich reduziert werden.

Bei besonders bevorzugten Ausgestaltungen werden besondere Symmetrieeigenschaften im Aufbau einer Spule vorgesehen. Diese lassen sich besonders einfach durch die parallele computergestützte Fertigung mehrerer Planarspulen erreichen.

Für Spulen in einer Sensoranwendung oder einer Aktuatoranwendung steht oftmals die Verschaltung der Spulen zu einem System im Vordergrund. Hier ist ein besonders hohes Maß an Symmetrieeigenschaften von Spulen von Vorteil. Insbesondere bei differenziellen Messanwendungen steht die Symmetrie des Messsignals zur Messanwendung im Vordergrund. Hier kann mit der Abbildung der Spulengeometrie in den Designdaten im Voraus über die Symmetrie des Messeffekts Einfluss genommen werden.

Eine besonders bevorzugte Ausgestaltung der Erfindung sieht somit den Schritt vor:
Entwerfen von Spulen mittels einer CAD-Datenverarbeitungsanlage in Abhängigkeit von einer vorgegebenen Symmetrie des Messeffekts.

Da auch eine Planarspule eine Tiefe hat, kann hier auf die Spiegelsymmetrie, die Punktsymmetrie und die Achsensymmetrie Einfluss genommen werden.

Somit weist eine bevorzugte Ausgestaltung des Verfahrens den Schritt auf: - Auswahl wenigstens einer Form von Spiegelsymmetrie, Punktsymmetrie und Achsensymmetrie im Design der planaren Spulen.

Derartige Symmetrien sind erfindungsgemäß durch die Spulen prozesssicher erreichbar, welche durch das datenbasierende Verfahren hergestellt werden.

Mit der sich einstellenden Symmetrie werden auch die Ausgangssignale in einem sehr engen Band festgehalten. Oft werden erst dadurch für viele Anwendungen differenzielle Ausführverfahren ermöglicht. Die Planarspulen können jeweils monofiler ausgebildet sein. Durch die Herstellung der Planarspulen und die Abbildung der Spulengeometrie in entsprechenden Fertigungsdaten, wie zum Beispiel lithographischen Fertigungsdaten, werden außerdem Gestaltungsfreiräume für bifilare Spulen und auch für Spulen mit multiplen Filaritäten erreichbar. Zum Beispiel können bifilare Spulen oder Spulen mit multiplen Filaritäten zum Aufbau von differenziellen Sensoren ausgenutzt werden. Zum Beispiel können mehrere differenzielle Sensoren als mehrfach filare Spule zum Generator vorgesehen sein.

Auch kann im Weiteren durch eine Schachtelung der Wicklungsrichtung im Spulenstapel ein magnetisches Residium ausgebildet werden, welches zum Beispiel mit extremen Sensorausgangssignalen bei einer geringen magnetischen Veränderung reagiert. Dies führt zu Sensoren, welche ohne merkliches nach außen propagiertes Feld als Abstandssensor oder auch als Materialsensor eingesetzt werden kann.

Diese Messung kann auch durch ein magnetisches Reference Target auf der dem Messobjekt abgewandten Seite unterstützt werden.

Bei einer besonders bevorzugten Ausgestaltung sind äußere Flächenelemente außerhalb einer Spulenanordnung oder um eine Planarspule herum sektoriert, so dass keine geschlossene Leiterschleife um die jeweilige Spule oder deren Bereich herum ausgebildet ist. Die Vorteile derartiger Ausgestaltungen werden im Folgenden näher erläutert.

Magnetfelder werden durch Spulen induziert. Die Feldlinien laufen charakteristischerweise senkrecht aus der Spulenmitte heraus und außen herum geschlossen. Damit werden auch außenliegende Flächenelemente magnetisch durchflutet. Bei der Verwendung magnetischer Wechselfelder können sich in den angrenzenden elektrisch leitenden Bereichen Wirbelströme ausbilden, die eigene Magnetfelder ausbilden, welche dem eigentlichen Magnetfeld entgegenstehen.

Diesem Effekt kann über geeignete Sektorierung der äußeren Flächenelemente zielgerecht entgegengewirkt werden. Eine starke Sektorierung (vielfältige Unterbrechung, beispielsweise in mehr als zwei, mehr als fünf, mehr als acht, mehr als zehn Sektoren) lässt hohe Frequenzen im Magnetfeld zu. Dem gegenüber dämpfen geschlossene Flächenelemente das höher frequente Verhalten.

Bei einer besonders bevorzugten Ausgestaltung wird für die Verwendung als Sensorspulen die Verwendung aller im Nahbereich der Spulen verwendeten Materialien auf deren magnetisches Verhalten hin ausgewählt. Insbesondere werden elektrische Leitungsmaterialien zum Kontaktierungen derart ausgewählt, dass sie nicht ferromagnetisch sind. Zum Beispiel ist eine Verwendung von Nickel-Gold als Lötoberfläche oft nicht zu empfehlen, da durch amorphe Ausbildung des Nickels im Abscheidungsprozess eine ferritische Folie entstehen kann. Dies führt zu einer unerwarteten Remanenz und damit zu einer Hysterese im Messignal. Eine solche kann durch die konsequente Verringerung oder Vermeidung von ferromagnetischen Materialien als Kontakt oder Verbindungsmaterialien verringert oder vermieden werden.

Durch geeignete Ausführung der Anschlüsse auf dem leiterplattengefertigten Spulenbauteil kann auch auf weitere Pins oder Kontakte oder Stecker/Buchsensysteme verzichtet werden. Beispielsweise werden an einem Leiterplattenelement direkte Kontaktierungspads vorgesehen. Derartige Kontaktierungspads können an einer Kante, z. B. dort rechtwinklig, oder an einer Ebene, insbesondere auf einer der Hauptebenen oder an einer der Ebenen der Stirnkanten, vorgesehen sein. Bei einer Ausgestaltung sind derartige Kontaktpads innerhalb einer Aussparung in einer Hauptkante des Leiterplattenelements vorgesehen.

Durch eine unmittelbare Ausführung der Anschlüsse auf dem leiterplattengefertigten Spulenbauteil kann auch auf weitere Pins oder Kontakte oder sonstige Stecker-/Buchsensysteme verzichtet werden. Dies führt nicht nur zu einer Reduzierung der gesamten Bauteile, sondern steigert auch das Gesamtsystem der Lebensdauer, da das nicht verwendete Bauteil auch nicht ausfallen kann.

Bei einer bevorzugten Ausgestaltung wird durch eine weitere Flächenabgrenzung auf einem Anschlusspad zusätzlich ein Testpad zur elektrischen und funktionalen Prüfung bereitgestellt, welches in einem Lötbereich nicht das Aufsetzen eines Testkontakts erfahren hat.

Ein Ausführungsbeispiel wird im Folgenden anhand der beigefügten Zeichnungen näher erläutert. Darin zeigt:

Fig. 1 ein CAD-Ausdruck für eine Planarspule zum Bilden eines Planarspulenpakets aus mehreren übereinander angeordneten Planarspulen, wobei ebenfalls die Stellen für Durchkontaktierungen dargestellt sind;

Fig. 2 ein CAD-Ausdruck wie in Fig. 1 für eine weitere, besonders bevorzugte Ausführungsform;

Fig. 3 eine schematische Darstellung eines Innenlagenkerns;

Fig. 4 eine schematische Darstellung eines in einem ersten Schritt eines lithografischen Verfahrens behandelten Innenlagenkerns;

Fig. 5          eine schematische Darstellung eines in einem zweiten Schritt eines lithografischen Verfahrens behandelten Innenlagenkerns;

Fig. 6          eine schematische Darstellung eines nach einem lithografischen Verfahren behandelten Innenlagenkerns;

Fig. 7          eine schematische Darstellung eines weiteren Verfahrensschritts zur Herstellung einer Spule;

Fig. 8          eine schematische Darstellung eines Innenlagenkerns bestehend aus einer Mehrzahl von Elementen;

Fig. 9          eine schematische Darstellung eines Elements des Innenlagenkerns;

Fig. 10         eine Fotografie eines Schnitts durch ein Planarspulenpaket;

Fig. 11a-11d    Unterschiedliche Ausführungsformen für CAD-Ausdrücke monofilarer und mehrfachfilarer Planarspulen;

Fig. 12         eine Fotografie, die induktive Bauelemente zum Bilden eines Sensorkopfes für einen Kraftsensor oder einen Drehmomentsensor

Fig. 13         von unterschiedlichen Seiten zeigt, wobei das induktive Bauteil eine Planarspulenanordnung mit mehreren übereinander angeordneten Planarspuleneinheiten aufweist; eine Fotografie eines induktiven Bauelements von oben und von unten dargestellt für einen Sensorkopf eines Kraftsensors oder Drehmomentsensors gemäß einer weiteren Ausführungsform; und

Fig. 14         eine vergrößerte Darstellung aus Fig. 6.

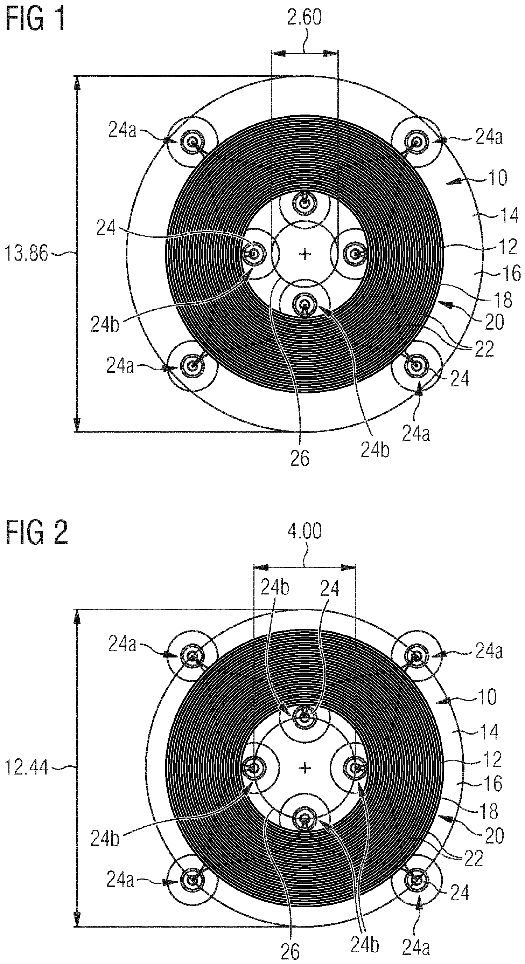

Im Folgenden werden unterschiedliche Ausführungsformen für Verfahren zum Herstellen einer Planarspulenanordnung 32 mit übereinander angeordneten Planarspuleneinheiten 10 anhand der Darstellungen der Figuren 1-7 näher erläutert. Bei dem Verfahren werden mehrere Planarspuleneinheiten 10 hergestellt, bei denen mehrere Planarspulen 12 gemeinsam auf einer Ebene auf einer Isoliermaterialschicht 14 durch computergestützte Fertigung hergestellt werden.

Bei einer besonders bevorzugten Ausgestaltung der Erfindung werden für die computergestützte Fertigung lithographische Verfahren verwendet, bei denen Oberflächen eines Substrats, insbesondere einer flexiblen Leiterplatte 16 gemäß Mustern belichtet werden, die aus CAD-Daten erzeugt werden. Anschließend werden belichtete oder unbelichtete Bereiche weggeätzt, um so die jeweilige Planarspule 12 als Muster aus einem elektrischen Leiter auf der Isoliermaterialschicht 14 der flexiblen Leiterplatte 16 zu bilden.

Dabei werden gleich mehrere Planarspulen 12 auf einer gemeinsamen, vorzugsweise flexiblen, Leiterplatte 16 erzeugt. Durch vorzugsweise maschinelles, ebenfalls CAD-gestütztes Übereinanderschichten der so gebildeten Planarspuleneinheiten 10 werden die jeweiligen Planarspulen 12 computergestützt exakt positioniert übereinander angeordnet, um so Spulen 20 zu bilden, die jeweils aus mehreren übereinander angeordneten Planarspulen 12 gebildet sind, wobei die Windungen 22 der jeweils übereinander angeordneten Planarspulen 12 mittels Durchkontaktierungen 24 miteinander verbunden werden.

Fig. 1 zeigt hierbei ein erstes Ausführungsbeispiel für einen Ausdruck aus einer CAD-Datei, die das Design einer der Planarspulen 12 und die Anordnung von Durchkontaktierungen 24 auf einer Isoliermaterialschicht 14 zeigt.

Um das Magnetfeld der Spule 20 zu verstärken, soll dann innerhalb der Spule 20 noch ein (nicht dargestellter) magnetischer Flusskonzentrator aus einem ferromagnetischen Material eingefügt werden. Somit ist im Inneren der Spule 20 eine Durchgangsöffnung 26 vorgesehen, die das ferromagnetische Material aufnehmen soll.

Bei der in Fig. 1 dargestellten Ausführungsform sind äußere Durchkontaktierungen 24a außerhalb der Spule 20 vorgesehen und innere Durchkontaktierungen 24b innerhalb der Spule 20 vorgesehen. Die Durchgangsöffnung 26 ist innerhalb des Ringbereichs, wo sich die inneren Durchkontaktierungen 24b befinden vorgesehen. Die Fläche, auf der die Windungen 22 für die Planarspulen 12 angeordnet werden können, befindet sich zwischen dem Ringbereich, auf denen die äußeren Durchkontaktierungen 24a angeordnet werden, und dem inneren Ringbereich, auf dem die innere Durchkontaktierung 24b angeordnet werden. Die Windungen 22 sind durch die computergestützte Fertigung optimiert auf dem verbleibenden Zwischenbereich angeordnet, so dass ein minimaler Abstand zwischen den einzelnen Windungen 22 verbleibt und die Fläche optimal mit dem Material aus dem elektrischen Leiter 18 belegt ist.

Fig. 2 zeigt eine Ansicht vergleichbar derjenigen zu Fig. 1 für eine gegenüber der Ausführungsform in Fig. 1 bevorzugte Ausführungsform der Planarspule 12.

Bei der Ausführungsform der Fig. 2 ist wenigstens die innere Durchkontaktierung 24b nicht in einem Ringbereich zwischen der Durchgangsöffnung 26 und der Planarspule 12 vorgesehen, sondern direkt am Rand der Durchgangsöffnung 26 vorgesehen. Die innere Durchkontaktierung 24b verläuft somit auf der Innenseite der Durchgangsöffnung 26.

Alternativ oder zusätzlich ist vorgesehen, dass die äußere Durchkontaktierung 24a nicht innerhalb einer Fläche eines äußeren Ringbereichs um die Planarspule 12 herum vorgesehen ist, sondern an der äußeren Seite der Isoliermaterialschicht 14.

Hierdurch ist der Flächenbereich, der für die Windungen 22 der Planarspulen 12 genutzt werden kann, gegenüber der Ausgestaltung der Fig. 1 deutlich vergrößert. Außerdem kann der Durchmesser für die Durchgangsöffnung gegenüber der Ausgestaltung von Fig. 2 deutlich vergrößert werden, ohne den Gesamtflächenbereich der Planarspule 12 zu vergrößern. Hierdurch kann eine größere Menge an ferromagnetischen Material innerhalb der Spule 20 angeordnet werden.

Bei einer Ausgestaltung des Verfahrens werden die einzelnen Planarspuleneinheiten 10, die jeweils eine Isoliermaterialschicht 14 und wenigstens eine oder mehrere darauf angeordnete Planarspulen 12, insbesondere gemäß der Ausgestaltung in Fig. 2, aufweisen, computergesteuert aufgrund von CAD-Daten und unter exakter Positionierung aufeinandergelegt. Dies erfolgt derart, dass zwischen jeder Planarspule 12 nur eine einzelne Isoliermaterialschicht 14, beispielsweise gebildet aus einem Prepreg, vorgesehen wird.

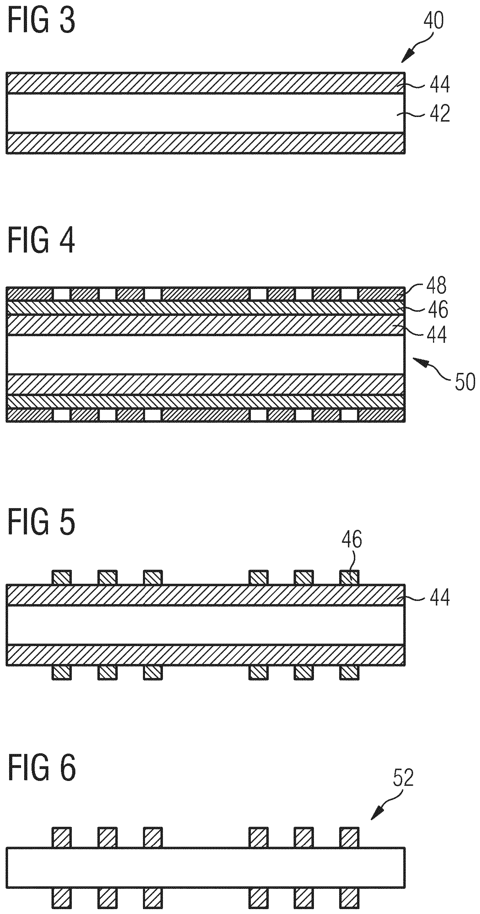

Der lithografische Prozess ist in Fig. 3 bis 6 veranschaulicht. Dabei wird ein Innenlagenkern 40 lithografisch behandelt. Der Innenlagenkern 40 besteht üblicherweise im Innern aus einer Schicht 42 aus Epoxidharz und Glasgewebe. Auf der Ober- und Unterseite des Innenlagenkerns 40 liegt eine Schicht Leitermaterial 44.

Im ersten Schritt des Lithografieverfahrens wird, wie in Fig. 4 gezeigt, ein lichtempfindlicher Film 46 und das Fotoelement 48 auf beiden Seiten zum Belichtungselement 50 aufgetragen.

Danach wird das Belichtungselement 50 belichtet. Dabei härtet der lichtempfindliche Film 46 an den belichteten Stellen aus, die unbelichteten Stellen des lichtempfindlichen Films 46 bleiben ungehärtet.

Im Anschluss an die Belichtung wird das Fotoelement 48 und die unbelichteten Stellen des lichtempfindlichen Films 46, wie in Fig. 5 gezeigt, abgetragen.

Im folgenden Ätzprozess wird das freiliegende Leitermaterial 44 üblicherweise mit einer alkalischen Lösung schließlich abgeätzt und der restliche ausgehärtete, lichtempfindliche Film 46 abgetragen. Zurück bleibt eine Struktur 52, die die Schicht 42 aus Epoxidharz und Glasgewebe mit einem darauf liegenden Schema aus Leitermaterial 44 enthält, wie es in Fig. 6 veranschaulicht ist.

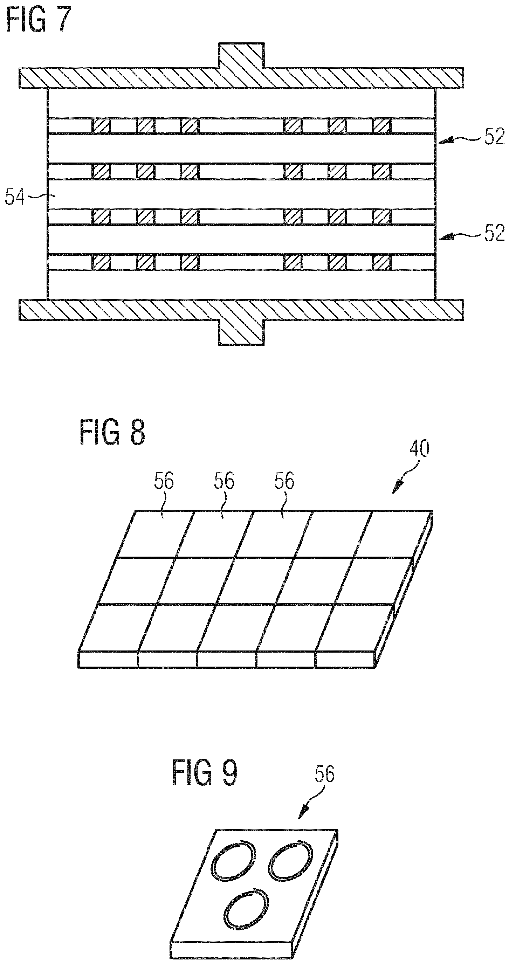

In Fig. 7 werden nun mehrere, hier zwei, bevorzugt 3 bis 15, dieser Strukturen 52 übereinandergestapelt. Dabei wird zwischen den Strukturen 52 eine Prepreg-Zwischenlage 54 aufgetragen. Die derart gestapelten Strukturen 52 werden schließlich in einer Presse zusammengedrückt. So entstehen abwechselnd eine Mehrzahl von Lagen aus Isoliermaterial und Leitermaterial.

Üblicherweise werden eine Mehrzahl von Elementen 56 auf einem gemeinsamen Innenlagenkern 40 gefertigt, wie es in Fig. 3-8 angedeutet ist. Dies ermöglicht eine Volumenfertigung bis in große Stückzahlen.

Im Anschluss an die großflächige, lithografische Behandlung wird ein Innenlagenkern 40 in die einzelnen Elemente 56 geschnitten. In den einzelnen Elementen 56 sind dann üblicherweise mehrere, bevorzugt drei oder fünf Spulen 20, wie in Fig. 9 angedeutet, angeordnet.

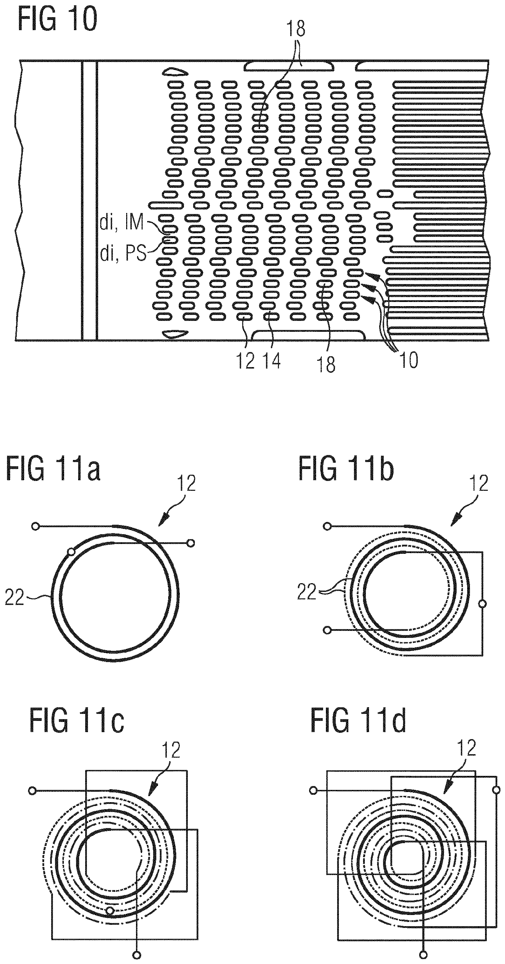

Fig. 10 zeigt eine Fotografie eines Schnitts durch eine Spule 20, wobei die Spule 20 nach einer Ausgestaltung des erfindungsgemäßen Verfahrens hergestellt worden ist.. Dabei ist das Zentrum der Spule mit der Durchgangsöffnung 26 links dargestellt, wobei die einzelnen Planarspulen 12 mit Isoliermaterial dazwischen zu sehen sind. Dieses Paket aus übereinander angeordneten Planarspulen 12 ist beispielsweise innerhalb einer Öffnung in einer als Trägersubstrat dienenden Leiterplatte - starres Leiterplattenelement 38 - angeordnet. Die Herstellung kann gemäß dem hier erläuterten Verfahren erfolgen. Wie in Fig. 10 ersichtlich ergeben sich dadurch Lagen von Planarspuleneinheiten, die übereinander geschichtet angeordnet sind. Zwischen den einzelnen aus elektrischen Leiter 18 gebildeten Planarspuleneinheiten ist jeweils eine Lage Isoliermaterial vorgesehen, welche beispielsweise eine Dicke von 40-50 μm aufweist.

Bei der Erfindung sind durch eine computergestützte Fertigung der Planarspulen 12 in stets exakter gleichbleibender Weise und/oder durch eine computergestützte Aufeinanderanordnung - sei es durch computergestütztes Aufeinanderliegen und die exakte Positionierung, sei es durch schichtweise Herstellung der Planarspuleneinheiten 10 übereinander - stets eine exakte Symmetrie der einzelnen Planarspulen 12 zueinander als auch die Möglichkeit einer weitaus dünneren Isoliermaterialschicht dazwischen geschaffen.

Die Planarspulendicke $d_{i,PS}$ aus dem elektrischen Leiter 18 der i-ten Planarspuleneinheit 10 von n übereinander angeordneten Planarspuleneinheiten 10 und die Schichtdicke $d_{i,IM}$ der Isoliermaterialschicht 14 der i-ten Planarspuleneinheit 10 wird dabei derart gewählt, dass vorzugsweise die Planarspulendicke $d_{i,PS}$ größer oder gleich der Schichtdicke $d_{i,IM}$ ist. Jedenfalls werden die Dicken $d_{i,PS}$ und $d_{i,IM}$ derart gewählt, dass gilt:

$$0,6 \leq \frac{D_{PS}}{D_{IM}+D_{PS}} \leq 0,9,$$

wobei $D_{PS} = \sum_{i=1}^{n} d_{i,PS}$ die Summe der Dicken $d_{i,PS}$ der Planarspulen und $D_{IM} = \sum_{i=1}^{n} d_{i,IM}$ die Summe der Dicken der Isoliermaterialschichten darstellt.

Hierdurch ergibt sich auf dem Flächenbereich, auf dem sich die Windungen 22 der Planarspulen 12 befinden, über das gesamte Spulenpaket hin gesehen einen größeren Anteil von Material des elektrischen Leiters 18 (z. B. Kupfer) im Vergleich zu dem Isoliermaterial der Isoliermaterialschicht 14. Dadurch kann auf einem kleineren Volumen bei gleichem auf die Spule 20 aufgeprägtem Strom eine größere Stromdichte und damit ein stärkeres Magnetfeld erzeugt werden.

Die computergestützte Fertigung der Spulen 20 bietet weiter noch die Möglichkeit, die einzelnen Planarspulen 20 sowohl monofilar, wie in Fig. 11a gezeigt, als auch mit mehreren Filaritäten, wie in den Figuren 11b-11d gezeigt herzustellen.

Hierdurch können Planarspulen 12 mit einer Windungsspirale oder mit mehreren elektrisch voneinander isolierten und unterschiedlich verschaltbaren Windungsspiralen, die vorzugsweise ineinandergreifen, hergestellt werden.

Hierdurch können konzentrisch zueinander angeordnete Spulen 20a, 20b hergestellt werden, die unterschiedlich kontaktiert werden können. Beispielsweise werden die unterschiedlichen Filaritäten einer mehrfach filaren Spule 20 zum differenziellen Messen verwendet. Bei einem anderen Ausführungsbeispiel kann eine der ineinander geschalteten Spulen 20a als Generatorspule und die andere als Messspule verwendet werden. Bei noch einer weiteren Ausgestaltung können mehrere ineinander geschaltete Spulen zur differenziellen Messung herangezogen werden. Bei noch einer weiteren Ausgestaltung können die unterschiedlichen ineinandergeschaltelten Spulen als unterschiedliche Elemente einer Brückenschaltung verwendet werden.

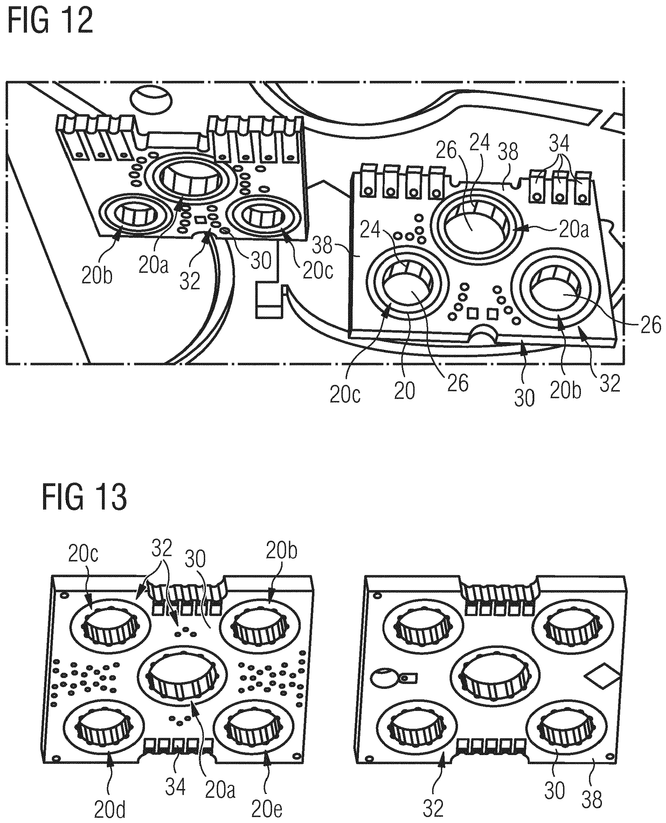

Fig. 12 zeigt ein erstes Ausführungsbeispiel eines induktiven Bauelements 30, welches eine gemäß dem zuvor erläuterten Verfahren hergestellte Planarspulenanordnung 32 aufweist, um eine erste Spule 20a, eine zweite Spule 20b und eine dritte Spule 20c zu bilden.

Das induktive Bauelement 30 kann als Teil eines Aktuators oder eines Sensors verwendet werden. Insbesondere kann das induktive Bauelement 30 als wesentlicher Bestandteil eines Sensorkopfes für einen Drehmomentsensor oder Kraftmesssensor der in den Literaturstellen D1-D10 erläuterten Art verwendet werden. Der Sensorkopf weist dann noch das ferromagnetische Verstärkungsmaterial auf. Für weitere Einzelheiten zum Aufbau wird des Sensorkopfes wird auf D10 verwiesen.

Im Falle der Verwendung für einen Sensorkopf kann die erste Spule 20a beispielsweise als Generatorspule zum Erzeugen eines Magnetfeldes in einem hinsichtlich einer Kraftbeaufschlagung zu messenden Element, beispielsweise einer Drehwelle, verwendet werden, während die zweite Spule 20b als erste Messspule und die dritte Spule 20c als zweite Messspule dient zum Messen einer Magnetfeldänderung, insbesondere eine Richtungsänderung eines Magnetfeldes unter Einfluss einer Kraft.

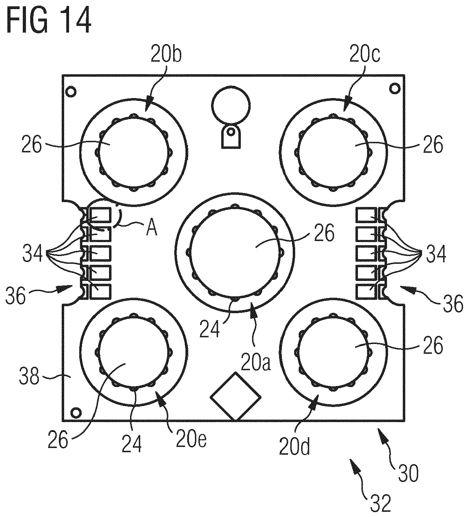

Wie aus Fig. 12 ersichtlich, ist in jeder der Spulen 20a, 20b, 20c, welche jeweils aus übereinander gelegten Planarspulen 12 gebildet ist, eine Durchgangsöffnung 26 vorgesehen, durch welches ein Material zur magnetischen Verstärkung hindurchgesteckt werden kann. Weiter sind an der Innenwand jeder Durchgangsöffnung 26 mehrere Durchkontaktierungen 24, 24b vorgesehen. Weitere Ausführungsformen des induktiven Bauelements 30 sind in den Figuren 13 und 14 dargestellt, wo zusätzlich zu der ersten Spule 20a, der zweiten Spule 20b und der dritten Spulen 20c noch eine vierte Spule 20d und eine fünfte Spule 20e vorgesehen sind. Die zweite bis fünfte Spule 20b bis 20e sind um die erste Spule 20a verteilt herum vorgesehen. Die vierte Spule 20d kann eine dritte Messspule bilden, und die fünfte Spule 20e kann eine vierte Messspule bilden.

Die Verschaltung der Messspulen - z. B. zweite Spule 20b bis fünfte Spule 20e - kann so erfolgen, wie dies im Einzelnen der deutschen Patentanmeldung DE 10 2017 112 913.8, auf welche für weitere Einzelheiten ausdrücklich verwiesen wird, beschrieben und gezeigt ist.

Insbesondere sind die Messspulen hier in einer so genannten X-Anordnung um die als Generatorspule wirkende erste Spule 20a herum angeordnet.

Kontaktpads 34b zum elektrischen Anschließen der einzelnen Spulen 20 und/oder von in den induktiven Bauelementen 30 sonst noch eventuell vorgesehene Elektronikbausteine sind vorzugsweise an wenigstens einer Außenkante des induktiven Bauelements 30 angeordnet.

Bei dem in Fig. 12 dargestellten Ausführungsbeispiel sind Kontaktpads an einer Seite angeordnet. Bei dem in Figuren 13 und 14 dargestellten Ausführungsbeispiel des induktiven Bauelements 30 sind die Kontaktpads 34 an gegenüberliegenden Seiten innerhalb einer reckteckförmigen Aussparung 36 an gegenüberliegenden Seiten des induktiven Bauelements 30 vorgesehen. Wie in Fig. 14 durch das Detail A angedeutet, kann eines der Kontaktpads als Testpad ausgebildet sein.

Eine bevorzugte Ausgestaltung eines Verfahrens zum Herstellen des für einen Sensorkopf einzusetzenden induktiven Bauelements 30 gemäß den Figuren 12 und 13 sieht vor, dass, wie dies vom Grundprinzip her aus der D11 bekannt ist, in einem starren Leiterplattenelement 38 Hohlräume für die einzelnen Spulen 20, 20a-20e ausgebildet werden.

Die einzelnen Planarspulen 12, die die einzelnen Lagen der Spulen 20a-20e bilden, werden gemeinsam als Planarspuleneinheit 10 auf der flexiblen Leiterplatte 16 wie zuvor erläutert hergestellt, und die n Planarspuleneinheiten 10 mit den jeweiligen Planarspulen 12 werden computergesteuert übereinander angeordnet oder computergesteuert übereinander hergestellt. So wird eine Planarspulenanordnung 32 gebildet, die die aus einzelnen übereinander gelegten Planarspulen 12 gebildeten Spulen 20, 20a-20e aufweist.

Bei einer Ausgestaltung der Erfindung werden die einzelnen Spulen mittels eines Schneidstempels gemeinsam ausgeschnitten und in einzelne Hohlräume des starren Leiterplattenelements 38 überführt.

Bei einer anderen Ausgestaltung der Erfindung wird die Planarspulenanordnung 32, die durch Übereinanderschichten der Planarspuleneinheiten 10 gebildet ist, als induktives Bauelement 30 verwendet, so dass kein starres Leiterplattenelement 38 benötigt wird.

Wie beispielsweise in den Figuren 1 und 2 dargestellt, können die Spulen 20 beispielsweise aus insgesamt 4-100, z. B. 15, Windungen pro Planarspule 12 hergestellt werden, wobei zum Beispiel n=8 Lagen übereinander verwendet werden. Bevorzugt liegt n im Bereich von 3-15.

Werden, wie dies in Fig. 1 dargestellt ist, Durchkontaktierungen in Ringbereichen, die innerhalb und außerhalb der Fläche der Windungen liegen, eingesetzt, lässt sich beispielsweise das Maß Kupfer zur Kontur auf typischerweise 0,3 mm einstellen.

Wenn man wie in Fig. 2 dargestellt, die Durchkontaktierungen in die Kontur aufnimmt, wird der Flächennutzungsanteil durch die Windungen 22 erheblich verbessert.

**Bezugszeichenliste:**

| | |
|---|---|
| 10 | Planarspuleneinheit |
| 12 | Planarspule |
| 14 | Isoliermaterialschicht |
| 16 | flexible Leiterplatte |
| 18 | elektrischer Leiter |
| 20 | Spule |
| 20a | erste Spule |
| 20b | zweite Spule |
| 20c | dritte Spule |
| 20d | vierte Spule |
| 20e | fünfte Spule |
| 22 | Windung |
| 24 | Durchkontaktierung |
| 24a | äußere Durchkontaktierung |
| 24b | innere Durchkontaktierung |
| 26 | Durchgangsöffnung |
| 30 | induktives Bauelement |
| 32 | Planarspulenanordnung |
| 34 | Kontaktpad |
| 36 | Aussparung |
| 38 | starres Leiterplattenelement |
| 40 | Innenlagenkern |
| 42 | Schicht aus Epoxidharz und Glasgewebe |
| 44 | Leitermaterial |
| 46 | lichtempfindlicher Film |
| 48 | Fotoelement |
| 50 | Belichtungselement |
| 52 | Struktur |
| 54 | Prepreg-Zwischenlage |
| 56 | Element |

**Patentansprüche**

1. Verfahren zum Herstellen eines Sensorkopfes für einen Drehmoment- oder Kraftsensor, der eine Generatorspule zum Erzeugen eines Magnetfeldes und wenigstens eine erste und eine zweite Messspule zum Messen einer Änderung eines in einen Messkörper induzierten Magnetfeldes aufweist, umfassend: Herstellen der Generatorspule und der Messspulen als Planarspulenanordnung (32), die n übereinander angeordnete Planarspuleneinheiten (10) aufweist, wobei n eine natürliche Zahl größer 1 ist, mit den Schritten:

   a) Herstellen einer i-ten Planarspuleneinheit (10) durch computergestützte Fertigung mehrerer aus elektrischen Leitern gebildeten und in einer Ebene liegenden Planarspulen (12) mit einer Planarspulendicke $d_{i,PS}$ auf einer Isoliermaterialschicht (14) aus elektrischen Isolationsmaterial mit einer Schichtdicke $d_{i,IM}$, für i gleich 1 bis n,
   b) schichtweises Anordnen der Planarspuleneinheiten (10) unter Zwischenlage der Isoliermaterialschicht (14) zwischen den Planarspulen (12), wobei die Dicken $d_{i,PS}$ und $d_{i,IM}$ derart gewählt werden, dass gilt:

   $$0,6 \leq \frac{D_{PS}}{D_{IM}+D_{PS}} \leq 0,9,$$

   wobei $D_{PS}=\sum_{i=1}^{n} d_{i,PS}$ die Summe der Dicken $d_{i,PS}$ der Planarspulen und $D_{IM}=\sum_{i=1}^{n} d_{i,IM}$ die Summe der Dicken der Isoliermaterialschichten ist,
   c) elektrisches Verbinden übereinander angeordneter Planarspulen (12) der Planarspuleneinheiten (10), um die Generatorspule und die Messspulen zu bilden.

2. Verfahren nach Anspruch 1, **dadurch gekennzeichnet, dass** in Schritt b) zwischen jeder Planarspule (12) nur eine einzelne Isoliermaterialschicht (14) mit ihrer Dicke $d_{i,IM}$ angeordnet wird.

3. Verfahren nach einem der voranstehenden Ansprüche,
   **dadurch gekennzeichnet, dass** Schritt a) wenigstens einen, mehrere oder alle der folgenden Schritte umfasst:

   a1) symmetrisches computergestütztes Herstellen der mehreren in einer Ebene liegenden Planarspulen (12) pro Planarspuleneinheit (10);
   a2) computergestütztes Herstellen von Planarspulen (12) unterschiedlicher Planarspuleneinheiten (10) symmetrisch zueinander;

a3) symmetrisches Aufbauen von Planarspulen (12) einer Planarspuleneinheit (10) und der Planarspulen (12) mehrerer der Planarspuleneinheiten (10) durch das computergestützte Herstellen;

a4) Durchführen des computergestützten Herstellens durch lithografisches Herstellen der Planarspulen (12),

a5) computergestütztes Herstellen der mehreren Planarspulen (12) pro Planarspuleneinheit (10) auf einer Isoliermaterialschicht (14), die ausgewählt ist aus der Gruppe von Isoliermaterialien, die ein Leiterplattenbasismaterial, eine Prepregschicht und ein Kunststoffmaterial umfasst;

a6) Herstellen der jeweiligen Planarspulen (12) mit mehreren voneinander getrennten Spulenbahnen;

a7) Herstellen der zentralen Generatorplanarspule und der ersten, der zweiten und einer dritten Messplanarspule pro Planarspuleneinheit in punktsymmetrischer Anordnung zueinander;

a8) Herstellen der zentralen Generatorplanarspule und der ersten, der zweiten, einer dritten und einer vierten Messplanarspule pro Planarspuleneinheit in achsensymmetriescher oder punktsymmetrischer Anordnung zueinander.

**4.** Verfahren nach einem der voranstehenden Ansprüche,
**gekennzeichnet durch**
d) Schaffen wenigstens einer Durchgangsöffnung (26) durch ein Zentrum übereinanderliegender Planarspulen (12) der Planarspuleneinheiten (10).

**5.** Verfahren nach Anspruch 4,
**gekennzeichnet durch** einen, mehrere oder alle der folgenden Schritte:

5.1 elektrisches Verbinden übereinanderliegenden Planarspulen (12) mittels wenigstens einer Durchkontaktierung (24) an der wenigstens eine Durchgangsöffnung (26);

5.2 Einfügen eines Flusskonzentrators in die wenigstens eine Durchgangsöffnung (26);

5.3 Durchführen von Schritt d) derart, dass die Isoliermaterialschichten (14) vor Schritt a) und/oder vor Schritt b) oder nach Schritt b) mit dem jeweiligen Bereich der Durchgangsöffnung (26) versehen werden.

**Claims**

**1.** A method for producing a sensor head for a torque or force sensor having a generator coil for generating a magnetic field and at least a first and a second measuring coil for measuring a change in a magnetic field induced in a measuring body, comprising: manufacturing the generator coil and the measuring coils as a planar coil assembly (32) having n planar coil units (10) arranged one above the other, where n is a natural number greater than 1, comprising the steps of:

a) manufacturing an i-th planar coil unit (10) by computer-aided fabrication of a plurality of planar coils (12) formed of electrical conductors and lying in one plane, with a planar coil thickness $d_{i,PS}$ on an insulating material layer (14) of electrical insulating material with a layer thickness $d_{i,IM}$, for i equal to 1 to n,

b) arranging the planar coil units (10) in layers with the insulating material layer (14) interposed between the planar coils (12), the thicknesses $d_{i,PS}$ and $d_{i,IM}$ being chosen such that

$$0{,}6 \leq \frac{D_{PS}}{D_{IM}+D_{PS}} \leq 0{,}9,$$

applies, where $D_{PS} = \sum_{i=1}^{n} d_{i,PS}$ is the sum of the thicknesses $d_{i,PS}$ of the planar coils and $D_{IM} = \sum_{i=1}^{n} d_{i,IM}$ is the sum of the thicknesses of the insulating material layers,

c) electrically connecting superimposed planar coils (12) of the planar coil units (10) to form the generator coil and the measurement coils.

**2.** Method according to claim 1, **characterized in that** in step b) only a single insulating material layer (14) with its thickness $d_{i,IM}$ is arranged between each planar coil (12).

**3.** Method according to any of the preceding claims, **characterized in that** step a) comprises at least one, several or all of the following steps:

a1) symmetrical computer-aided manufacturing of the plurality of planar coils (12) lying in one plane per planar coil unit (10);

a2) computer-aided manufacturing of planar coils (12) of different planar coil units (10) symmetrically with respect to each other;

a3) symmetrically building up planar coils (12) of one planar coil unit (10) and the planar coils (12) of a plurality of the planar coil units (10) by the computer-aided manufacturing;

a4) performing the computer-aided manufacturing by lithographically producing the planar coils (12),

a5) computer-aided manufacturing of the plurality of planar coils (12) per planar coil unit (10) on an insulating material layer (14) selected from the group of insulating materials comprising a printed circuit board base material, a prepreg layer, and a plastic material;

a6) manufacturing the respective planar coils (12) having a plurality of coil tracks separated from each other;

a7) manufacturing the central generator planar coil and the first, the second, and a third measuring planar coil per planar coil unit in a point-symmetrical arrangement with respect to each other;

a8) manufacturing the central generator planar coil and the first, the second, a third, and a fourth measurement planar coil per planar coil unit in an axis-symmetrical or point-symmetrical arrangement with respect to each other.

4. Method according to one of the preceding claims, **characterized by**
d) creating at least one through opening (26) through a center of superimposed planar coils (12) of the planar coil units (10).

5. Method according to claim 4, **characterized by** one, more or all of the following steps:

   5.1 electrically connecting superimposed planar coils (12) by means of at least one through contact (24) at the at least one through opening (26);
   5.2 inserting a flux concentrator into the at least one through opening (26);
   5.3 performing step d) such that the insulating material layers (14) are provided with the respective area of the through opening (26) before step a) and/or before step b) or after step b).

**Revendications**

1. Procédé de production d'une tête de capteur pour un capteur de couple ou de force, qui présente une bobine génératrice pour générer un champ magnétique et au moins une première et une deuxième bobine de mesure pour mesurer une variation d'un champ magnétique induit dans un corps de mesure, comprenant :
fabriquer la bobine génératrice et les bobines de mesure sous la forme d'un ensemble de bobines planaires (32) comprenant n unités de bobines planaires (10) superposées, n étant un nombre naturel supérieur à 1, comprenant les étapes consistant à :

   a) fabrication d'une i-ième unité de bobine planaire (10) par fabrication assistée par ordinateur d'une pluralité de bobines planaires (12) formées de conducteurs électriques et se trouvant dans un plan, avec une épaisseur de bobine planaire $d_{i,PS}$ sur une couche de matériau isolant (14) en matériau d'isolation électrique avec une épaisseur de couche $d_{i,IM}$, pour i étant égale à 1 à n,
b) disposer les unités de bobines planes (10) par couches en intercalant la couche de matériau isolant (14) entre les bobines planes (12), les épaisseurs $d_{i,PS}$ et $d_{i,IM}$ étant choisies de telle sorte que l'on ait :

$$0{,}6 \le \frac{D_{PS}}{D_{IM}+D_{PS}} \le 0{,}9,$$

où $D_{PS}=\sum_{i=1}^{n} d_{i,PS}$ est la somme des épaisseurs $d_{i,PS}$ des bobines planaires et $D_{IM}=\sum_{i=1}^{n} d_{i,IM}$ la somme des épaisseurs des couches de matériau isolant,
c) relier électriquement des bobines planaires (12) superposées des unités de bobines planaires (10) pour former la bobine génératrice et les bobines de mesure.

2. Procédé selon la revendication 1, **caractérisé en ce que**, à l'étape b), seule une couche unique de matériau isolant (14) de son épaisseur $d_{i,IM}$ est disposée entre chaque bobine planaire (12).

3. Procédé selon l'une quelconque des revendications précédentes, **caractérisé en ce que** l'étape a) comprend au moins une, plusieurs ou toutes les étapes suivantes :

   a1) fabrication symétrique assistée par ordinateur de la pluralité de bobines planaires (12) situées dans un plan par unité de bobines planaires (10);
   a2) fabrication assistée par ordinateur de bobines planaires (12) de différentes unités de bobines planaires (10) symétriques les unes par rapport aux autres;
   a3) construire symétriquement les bobines planaires (12) d'une unité de bobines planaires (10) et les bobines planaires (12) de plusieurs des unités de bobines planaires (10) par la fabrication assistée par ordinateur;
   a4) effectuer la fabrication assistée par ordinateur en fabriquant les bobines planaires (12) par lithographie,
   a5) fabriquer sous l'assistance par ordinateur la pluralité de bobines planaires (12) par unité de bobine planaire (10) sur une couche de matériau isolant (14) choisie dans le groupe de matériaux isolants comprenant un matériau de base de carte de circuit imprimé, une couche pré-imprégnée et un matériau plastique;

a6) fabriquer les bobines planaires respectives (12) avec plusieurs pistes de bobines séparées les unes des autres;

a7) fabriquer la bobine planaire centrale du générateur et la première, la deuxième et une troisième bobine planaire de mesure par unité de bobine planaire dans une disposition à symétrie ponctuelle les unes par rapport aux autres;

a8) fabriquer la bobine plane centrale du générateur et la première, la deuxième, une troisième et une quatrième bobine plane de mesure par unité de bobine plane dans une disposition axisymétrique ou ponctuellement symétrique l'une par rapport à l'autre.

4. Procédé selon l'une des revendications précédentes,
   **caractérisé par**
   d) la création d'au moins une ouverture de pénétration (26) à travers un centre de bobines planaires superposées (12) de l'unité de bobines planaires (10).

5. Procédé selon la revendication 4,
   **caractérisé par** une, plusieurs ou toutes les étapes suivantes:

   5.1 connexion électrique de bobines planaires superposées (12) au moyen d'au moins un contact traversant (24) au niveau de l'au moins une ouverture de pénétration (26);

   5.2 insertion d'un concentrateur de flux dans ladite au moins une ouverture de pénétration (26) ;

   5.3 exécution de l'étape d) de telle sorte que les couches de matériau isolant (14) soient munies de la zone respective de l' ouverture de pénétration (26) avant l'étape a) et/ou avant l'étape b) ou après l'étape b).

# FIG 1

2.60

24a

24a

10

14

12

16

18

20

22

24

24

13.86

24b

24b

26

# FIG 2

4.00

24b  24

24a

24a

10

14

12

16

18

20

22

24

12.44

24b

24b

26  24b  24a

FIG 3

FIG 4

FIG 5

FIG 6

FIG 7

52

54

52

FIG 8

56    56    56    40

FIG 9    56

## FIG 10

## FIG 11a

## FIG 11b

## FIG 11c

## FIG 11d

# FIG 12

# FIG 13

# FIG 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3311818 A
- EP 0384042 A2
- DE 3031997 A1
- US 3011340 A
- US 4135391 A
- DE 102009008074 A1
- WO 2012152515 A1
- DE 8511143 U1
- WO 2018019859 A
- EP 2107577 A1
- WO 2010065113 A1
- WO 2011138232 A1
- US 20150302967 A1
- US 20170365386 A1
- DE 4105999 A1
- US 20100194513 A2
- WO 2011152994 A1
- DE 102017112913

**In der Beschreibung aufgeführte Nicht-Patentliteratur**

- Magnetoelastic sensors. Sensors: Magnetic sensors. VCH-Verl.-Ges, 1989, 97-152